# EUROPÄISCHE PATENTSCHRIFT

(11) **EP 0 916 442 B1**
(45) Veröffentlichungstag und Bekanntmachung des Hinweises auf die Patenterteilung: **09.06.2004**
(21) Anmeldenummer: 98250390.6
(22) Anmeldetag: 06.11.1998
(51) Int. Cl.: B23K 26/14

(54) **Verfahren und Vorrichtung zur Abtragung einer Oberflächenschicht**
Process and device for removal of surface layer
Procédé et appareil pour l'enlévement d'une couche superficielle

(30) Priorität: 12.11.1997 DE 19749981
(43) Veröffentlichungstag der Anmeldung: 19.05.1999
(73) Patentinhaber: W.O.M. World of Medicine AG, 96337 Ludwigsstadt (DE)
(72) Erfinder: Müller, Gerhard, Prof. Dr.-Ing., 14129 Berlin (DE); Fricke, Thomas, 10245 Berlin (DE)
(74) Vertreter: von Oppen, Joachim, Dipl.-Ing.

(56) Entgegenhaltungen:
- DE-A- 3 911 871
- DE-A- 4 138 468
- DE-C- 19 615 633
- US-A- 5 267 856
- PATENT ABSTRACTS OF JAPAN vol. 008, no. 148 (M-308), 11. Juli 1984 (1984-07-11) & JP 59 045092 A (FUJI DENPA KOUKI KK), 13. März 1984 (1984-03-13)

## Beschreibung

Die Erfindung betrifft ein Verfahren zur Abtragung von Oberflächenschichten von einem Substrat gemäß dem Oberbegriff des Anspruchs 1 und eine Vorrichtung zur Durchführung des Verfahrens.

Soweit nach dem Stand der Technik CO₂-Laser zur Reinigung kontaminierter Oberflächen verwendet werden, sind dieses sogannte Dauerstrichlaser, die das Abtragen organischer/metallo-organischer Kontaminationen über den Prozeß der thermischen Verbrennung und Verdampfung herbeiführen. Dabei entstehen naturgemäß sehr hohe Temperaturen, die allenfalls von metallischen Untergründen toleriert werden und damit nicht zu einer zusätzlichen Schädigung der zu reinigenden Oberfläche führen. Bei nichtmetallischen Substraten, insbesondere bei Kunststoffen und Biomaterialien, führt die Dauerstrich-Laserbehandlung der Oberflächen zu einer Entkohlung, die die Oberfläche selbst zerstört bzw. - bei Keramiken und ähnlichen Substraten - aufgrund der niedrigen Wärmeleitung des Substrats zu extrem hohen lokalen Temperaturspannungen führt, die Abplatzungen der Oberfläche zur Folge haben können.

Aus der japanischen Patentanmeldung JP 590 45 092 ist ein Verfahren bekannt, bei dem nicht eine Oberflächenbeschichtung, sondern ein nur geringfügig Laserstrahlung absorbierendes Substrat selbst durch Laserbestrahlung und Aufbringen von Flüssigkeit bearbeitet wird. Dieses Verfahren hat den Nachteil, dass es zu einer im vorliegenden Fall unerwünschten Beschädigung des Substrates führt. Aus der US 5,267,856 ist ein Verfahren zur Behandlung beispielsweise von Zahnmaterial bekannt, bei dem Flüssigkeit in die Oberfläche des zu behandelnden Materials eindringen soll und dann mit Hilfe eines Lasers verdampft wird, wobei aufgrund des Dampfdruckes Oberflächenmaterial vom übrigen Material abgetrennt werden kann.

Bezüglich der beanspruchten Vorrichtung ist aus der DE 195 15 633 ein Handreinigungsgerät für die Oberflächenreinigung bekannt.

Somit war das Reinigen von Oberflächen mit Dauerstrich-CO₂-Lasern bislang nur auf wenige Spezialgebiete eingeschränkt.

Der Erfindung liegt deshalb die Aufgabe zugrunde, ein Verfahren und eine Vorrichtung zu entwickeln, die es ermöglichen, im Rahmen einer Oberflächenreinigung Farb- oder Oxidschichten o.ä. mittels Dauerstrich-Laserstrahlung auch von nichtmetallischen Substraten abzutragen.

Die Aufgabe wird mit den im Anspruch 1 angegebenen Merkmalen gelöst.

Überraschenderweise hat sich gezeigt, daß die Nachteile eines Dauerstrich-CO₂-Lasers durch die Kombination dreier erfindungsgemäßer Verfahrensmerkmale vermieden werden können:

Zum einen wird der Laserstrahl nicht mehr flächig über das zu reinigende Substrat geführt, was zu relativ niedrigen Leistungsdichten führen würde, sondern (bevorzugt nahezu beugungsbegrenzt) fokussiert, um extrem hohe Leistungsdichten (größer. 50 kW/cm², typisch 250 kW/cm²) zu realisieren.

Weiterhin wird - bevorzugt unmittelbar vor Beaufschlagung mit der Laserstrahlung - die zu reinigende Oberfläche mit einem dünnen Fluidfilm bzw. Tröpfchenteppich benetzt, der beispielsweise mittels einer Aerosolsprühung aus einem Fluid-Gasgemisch durch eine auf den Prozeßort gerichtete Sprühdüse aufgebracht wird. Die Vorabbenetzung der mit Laserstrahlung zu beaufschlagenden und damit zu reinigenden Oberfläche wirkt folgendermaßen: Wird eine geeignetes Fluid (bei einer bevorzugten Ausführung Wasser) verwendet, so wird die CO₂-Laserstrahlung in der Benetzung nahezu vollständig absorbiert. Bei den eingesetzten sehr hohen Leistungsdichten und einem Fokusdurchmesser von typischerweise kleiner als 2/10 mm führt dies zu einer lokalen explosionsartigen Verdampfung des Fluids. Durch die Oberflächenadhäsion des Fluidfilms und die bei der explosionsartigen Verdampfung enstehenden Stoßwellen wird die auf der zu reinigenden Oberfläche befindliche Schicht abgelöst und in dem abströmenden Dampf mit weggerissen.

Als weitere erfindungsgemäße Maßnahme wird der hochfokussierte CO₂-Laserstrahl schnell über die zu reinigende Oberfläche hinweggeführt. Typische Abtastgeschwindigkeiten liegen bei deutlich mehr als 1 mm/s. Dies hat zur Folge, daß das zu reinigende Oberflächenelement nur sehr kurzzeitig (speziell kürzer als 10 ms) der hochintensiven CO₂-Laserstrahlung ausgesetzt ist. Das hat zum einen den bereits beschriebenen explosionsartigen Verdampfungsprozeß zur Folge und dient zum anderen dazu, daß die durch die Transmissionsänderung des Fluidfilms beim Verdampfungsprozeß (Wasserdampf ist für CO₂-Laserstrahlung beispielsweise um mehr als eine Größenordnung transparenter als ein Wasserfilm) nicht zu einer Uberhitzung des bereits behandelten Oberflächenelements führt, sondern lediglich noch - abhängig von Fokusdurchmesser, Scangeschwindigkeit und eingesetzter Leistungsdichte - zu einer intermediären Beaufschlagung mit deutlich verminderter Energiedichte. Hierdurch wird zum einen eine Uberhitzung des jeweils behandelten Oberflächenelements vermieden, und zum anderen sind in Abhängigkeit von den Spezifika der jeweils zu reinigenden Oberfläche die Prozeßparameter einzustellen, die gerade noch ausreichen, um eine Restkontamination an der Oberfläche thermisch abzudampfen.

Neben den beschriebenen Effekten hat die Kombination der genannten Verfahrenselemente einen weiteren wichtigen Vorteil, der darin besteht, daß bei geeigneter Wahl des Fluids die Fluidmoleküle mit den bei der explosionsartigen Verdampfung der Kontaminate entstehenden Radikalen spontan Verbindungenen eingehen und somit die bekanntermaßen aggressiven und toxischen Verbrennungsradikale abreagieren. Die so entstandene Dampfwolke aus verdampftem Fluid (Wasser), verdampfter Oberflächenverunreinigung und im Fluid gebundenen Radikalen aus der Verunreinigung wird dann bevorzugt abgesaugt und in einem an sich bekannten Filtersystem aufgefangen.

Durch diese Merkmalskombination wird verhindert, daß umweltgefährdende Stoffe bei der Reinigung der Oberfläche freigesetzt werden. Weder entstehen volatile toxische Gase noch verbleiben auf der Oberfläche chemisch aktive Reste wie bei Reinigungstechniken nach dem Stand der Technik üblich.

Für die Erzeugung der Oberflächenbenetzung werden, speziell bei Einsatz eines Aerosols, sehr dünne Schichten mit einer bevorzugten Dicke zwschen 0,05 und 0,5 mm erzeugt und hierfür extrem geringe Flüssigkeitsmengen benötigt - beispielsweise beim bevorzugten Ausführungsbeispiel nur ca. 1 Liter Fluid pro 10 m² zu reinigender Oberfläche. In Weiterführung des Erfindungsgedankens wird zudem das eingesetzte Fluid durch einen Flüssigkeitsabscheider im Filtersystem zurückgewonnen.

Neben Wasser ist der Einsatz anderer Fluide möglich, soweit diese unter Ausnutzung des Erfindungsgedankens in der Funktion als Radikalfänger für entstehende kontaminante Abgasprodukte des Abtragungsprozesses wirken bzw. sich (speziell bei der Reinigung hydrophober Oberflächen) zur Erzielung einer Benetzung eignen.

Mit dem vorgeschlagenen Verfahren lassen sich besonders vorteilhaft anorganische (speziell keramische) oder organische (speziell polymere oder biologische) Substrate von unerwünschten Oberflächenschichten befreien.

Die Implementierung der erfindungsgemäßen Verfahrensschritte in einer Vorrichtung wird anhand eines bevorzugten Ausführungsbeispiels nachstehend näher beschrieben:

Die Strahlung des CO₂-Lasers wird über einen Mehrspiegel-Gelenkarm nach dem Stand der Technik bzw. über optische Wellenleiter nach dem Stand der Technik zu einem Bearbeitungshandstück geführt, das zum einen die Kollimationsund Fokussieroptik für die CO₂-Laserstrahlung enthält und zum anderen einen Abtastmechanismus, der es gestattet, den fokussierten Laserstrahl flächig über die zu behandelnde Oberfläche zu führen. Der Abtastmechanismus ist so ausgelegt, daß keine Umkehrpunkte mit Abtastgeschwindigkeit Null durch Richtungsänderung entstehen, also typischerweise kreisförmig, ellipsenförmig oder in Form von Lissajous-Figuren. Die Laserstrahlung wird unter einem von 90° abweichenden Anstellwinkel auf die Oberfläche geführt, um zu verhindern, daß das von der Oberfläche explosionsartig abdampfende Material rückwärts gegen die Fokussieroptik strömt und diese beschädigt. Die Sprühdüse für das Aerosol ist im wesentlichen paraxial, jedoch unter einem leichten Anstellwinkel zur Achsrichtung der Applikation der Laserstrahlung angeordnet dergestalt, daß primär nur eine begrenzte Fläche benetzt wird, die im wesentlichen dem mit dem abtastenden Laserstrahl beaufschlagten Oberflächenfeld entspricht.

Beide Hauptelemente - Laseroptik inklusive Abtasteinrichtung und Aerosoldüse - sind im Inneren eines Saugkäfigs angeordnet, der durch Verfahreinrichtungen (typischerweise durch zwei bis drei lenkbare Rollen bzw. bevorzugt durch drei Kugelverfahrlager) in einem geringen Abstand zur zu reinigenden Oberfläche geführt werden kann. Aufgrund der Absaugleistung entsteht im Saugrüssel wegen des engen Spaltes zwischen Saugkäfig und Oberfläche eine hohe Querströmung, die zusätzlich verhindert, daß wesentliche Anteile der Abdampfprodukte in Richtung der Arbeitsoptik gelangen. Weiterhin ist der Saugkäfig derart ausgelegt, daß er freie Sicht auf die zu behandelnde Oberfläche durch geeignete Fenster bzw. durch die Ausführung in transparentem Material ermöglicht. Zudem ist das Fenstermaterial derart gewählt, daß es die benutzte Laserstrahlung absorbiert, so daß bei bestimmungsgemäßer Benutzung des Handstückes die gesamte Laseranlage als eigensicher und damit nach Industriestandard benutzbar eingestuft werden kann.

Die gesamte Anordnung ist auf einem ergonomisch geformten Handgriff montiert, so daß eine ergonomisch einfache Bedienerführung möglich ist. In diesem Handgriff sind zusätzlich die Bedienelemente zur Auslösung der Laserstrahlung, zur Regulierung der Saugstärke und zur Regulierung des Aerosolgemisches angeordnet.

Vorteilhafte Weiterbildungen der Erfindung sind im übrigen in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine Prinzipskizze zur Ausführung der Erfindung,
- Figur 2: eine schematische Darstellung wesentlicher Komponenten einer bevorzugten Vorrichtung zur Ausführung der Erfindung,
- Figur 3: eine schematische Darstellung einer gegenüber Fig. 2 geringfügig modifizierten Vorrichtung,
- Fig. 4: eine Darstellung einer Gesamtanordnung gemäß einer ersten Ausführungsform,
- Fig. 5: eine schematische Darstellung der Steuerung für eine Ausführungsform der Erfindung,
- Fig. 6: eine Darstellung einer Gesamtanordnung gemäß einer weiteren Ausführungsform.

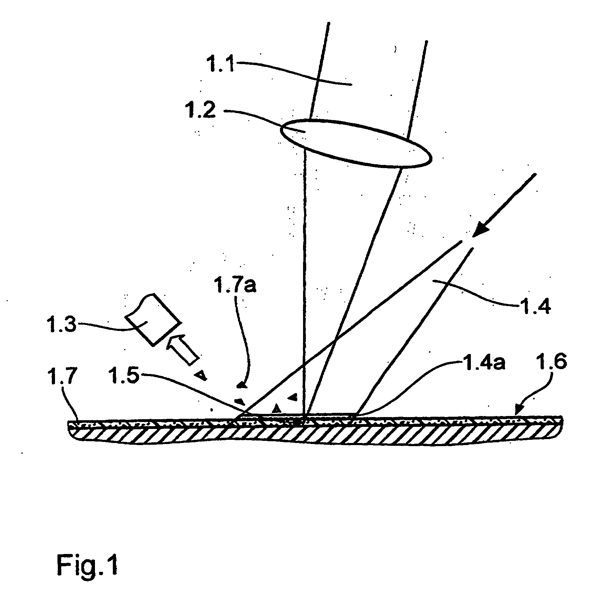

Fig. 1 zeigt das grundsätzliche Verfahren in seiner bevorzugten Ausführung. Ein Laserstrahl 1.1 wird durch eine Fokussiereinrichtung 1.2, die im einfachsten Fall eine Sammellinse sein kann, so auf eine zu bearbeitende Oberfläche 1.6 mit einer Kontaminationsschicht 1.7 fokussiert, daß der Fokus 1.5 genau auf der Oberfläche liegt. Der Laserstrahl 1.1 wird schnell über die Oberfläche 1.6 geführt, wobei gleichzeitig der Oberflächenbereich um den Fokus 1.5 durch eine Aerosolsprühung 1.4 mit einem Fluid 1.4' benetzt und konditioniert wird, wobei sich auf der Schicht 1.7 ein sehr dünner Fluidfilm 1.4a bildet. Durch eine Absaugeinrichtung 1.3 werden das aus dem Fluidfilm unter Einwirkung der fokussierten Laserstrahlung entwickelte Gas sowie restliche Flüssigkeitströpfchen und von der zu bearbeitenden Oberfläche 1.6 abgelöste Partikel 1.7a der Schicht 1.7 abgesaugt und gebunden.

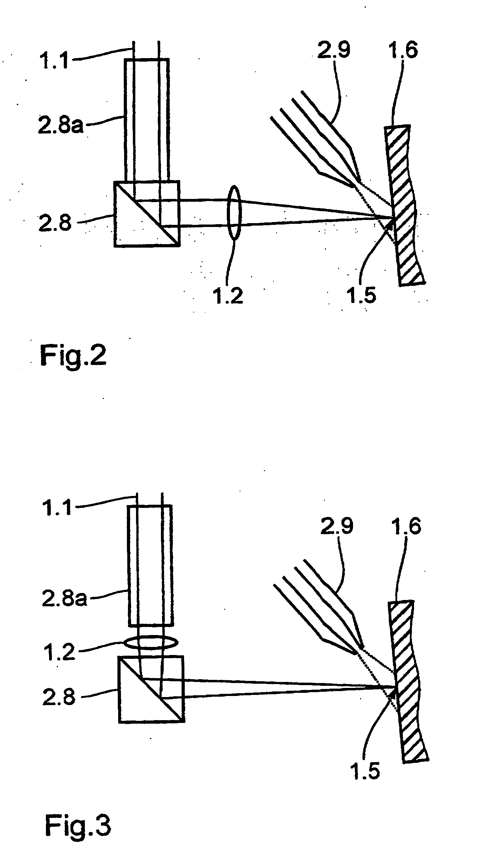

Wie Fig. 2 zeigt, ist es durch Einsatz eines Scanners 2.8 möglich, eine konstante Ablenkgeschwindigkeit des Fokus 1.5 des Laserstrahls 1.1 auf der zu bearbeitenden Oberfläche 1.6 zu erreichen. Der Laserstrahl 1.1 kann über eine (nicht dargestellte) optische Faser, einen optischen Wellenleiter oder einen Spiegelgelenkarm mit Hilfe eines entsprechenden Adapters 2.8a in den Scanner 2.8 eingekoppelt werden. Die Fokussiereinrichtung 1.2 ist hierbei (vom Laser aus gesehen) nach dem Scanner 2.8 angeordnet. Die Aerosolsprühung 1.4 wird durch eine Sprühdüse 2.9 realisiert, die spitzwinklig zur Oberfläche angeordnet ist und den Oberflächenbereich um den Fokus 1.5 herum für die abtragende Einwirkung des Laserstrahls konditioniert.

Die Vorrichtung nach Fig. 3 entspricht im wesentlichen der nach Fig. 2, mit dem Unterschied, daß die Fokussiereinrichtung 1.2 vor dem Scanner 2.8 angeordnet und der Adapter 2.8a nicht in den Scanner integriert ist.

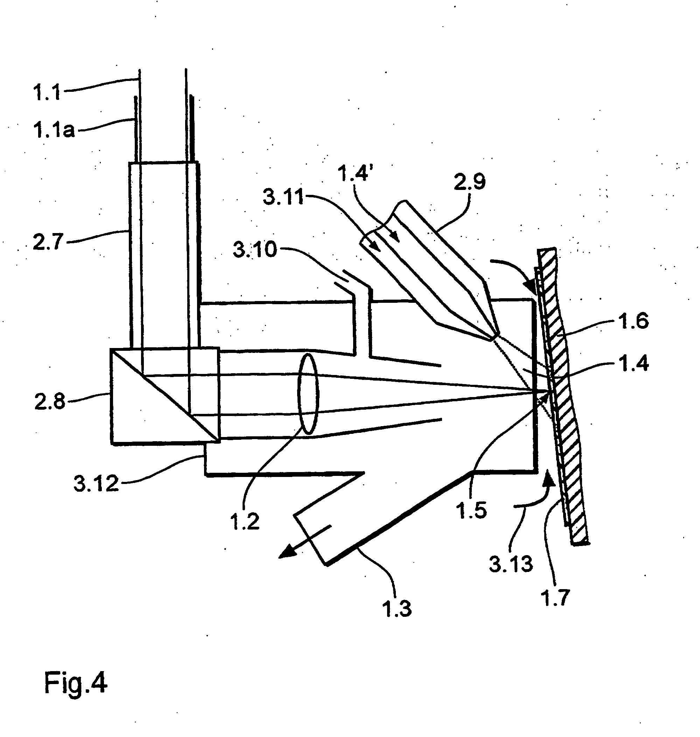

Fig. 4 zeigt die Anordnung aller wesentlichen Einzelteile und Bausteine in einem Arbeitskopf zur Realisierung der lasergestützten Oberflächenreinigung. Ein Lichtleiter-Führungssystem 1.1a des Laserstrahls 1.1 ist über den Adapter 2.8a mit dem Scanner 2.8 und der Fokussiereinrichtung 1.2 verbunden. Eine Gasspülung 3.10 ist vor der Fokussiereinrichtung 1.2 und dem Scanner 2.8 angeordnet, so daß keine Schädigung der optischen Oberflächen durch das Aerosol 1.4 oder abgesprengte Partikel der Schicht 1.7 auf der Oberfläche 1.6 erfolgen kann. In der Sprühdüse 2.9 wird Fluid 1.4' mit Prozeßgas 3.11 gemischt und als Aerosol 1.4 auf den Oberflächenbereich um den Fokus 1.5 gesprüht. Die Sprühdüse 2.9, die Fokussiereinrichtung 1.2 mit Gasspülung 3.10 und der Oberflächenbereich um den Fokus sind von einem Absaugkäfig 3.12 umgeben, der an die Absaugeinrichtung 1.3 angeschlossen ist. Über einen Spalt zwischen dem Absaugkäfig 3.12 und der Oberfläche 1.6 bildet sich eine durch Pfeile symbolisierte transversale Luftströmung aus.

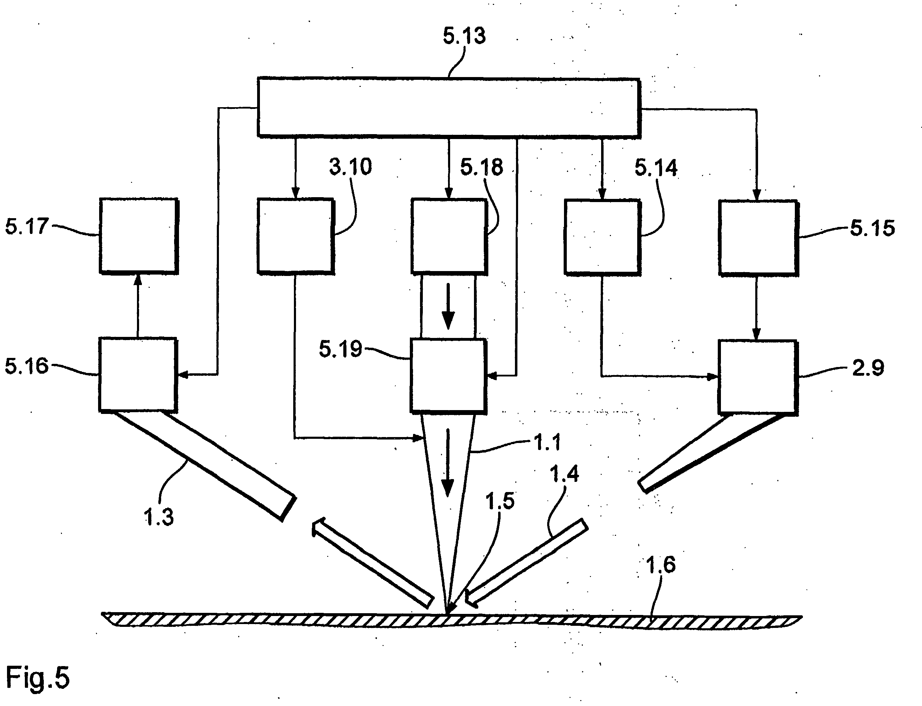

Zur Erzielung optimaler Ergebnisse werden alle Prozeßparameter dem jeweiligen Anwendungsfall entsprechend eingestellt, geregelt und überwacht. Dazu dient eine Prozeßablaufsteuerung mit einem Controller 5.13, wie sie in Fig 5 als Beispiel schematisch dargestellt ist. Entsprechend Fig. 5 sind alle in den vorangehenden Figuren gezeigten steuerbaren Funktionseinheiten, die den Oberflächenreinigungseffekt beeinflussen, mit dem Controller 5.13 verbunden und werden von diesem geregelt und überwacht.

Dies betrifft neben einer Pumpeneinheit 5.14 zur Zuführung des Benetzungsfluids ein steuerbares Ventil 5.15 für das Prozeßgas und im allgemeinsten Fall auch die Mischdüse 2.9 selbst. An eine ebenfalls durch den Controller 5.13 gesteuerte Vakuumpumpe 5.16, die Bestandteil der Absaugeinrichtung 1.3 ist, ist ein Filter oder Filtersystem 5.17 angeschlossen, das etwaige umweltbelastende Bestandteile der Oberflächenpartikel und des Aerosols bzw. deren Reaktionsprodukte zurückhält.

Schließlich steuert der Controller 5.13 insbesondere auch einen CO₂-Laser 5.18 sowie eine integrierte Antriebseinheit 5.19 der Fokussiereinrichtung 1.2 und des Scanners 2.8 (Fig. 4).

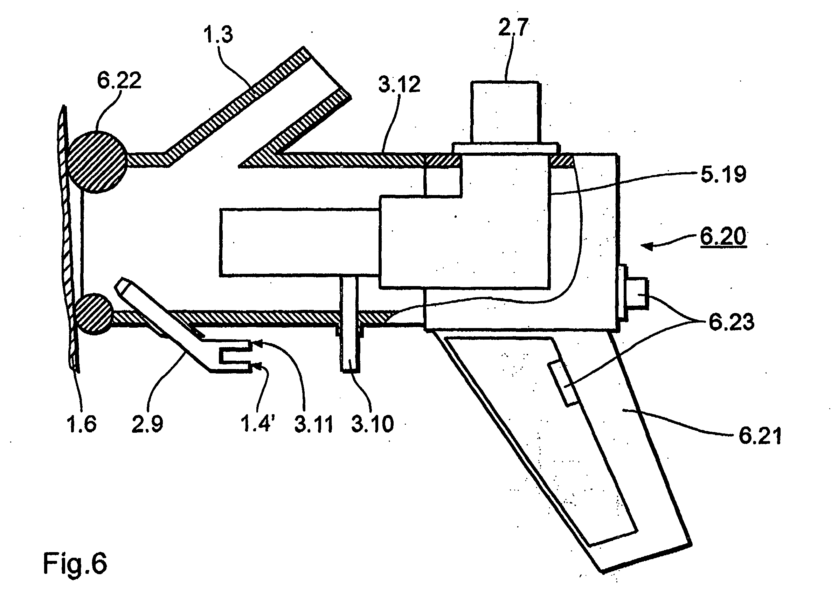

Fig. 6 zeigt eine bevorzugte Vorrichtung in Gestalt eines Funktionsmusters, das zur Oberflächenreinigung mit Hilfe von Dauerstrich-Laserstrahlung einsetzbar ist. Fokussiereinrichtung 1.2, Scanner 2.8 und Ansteuereinheit 5.19 (hier zusammen schematisch als Block 5.19 bezeichnet) sowie der Adapter 2.7 für einen (nicht dargestellten) Spiegelgelenkarm oder optischen Wellenleiter sind in einem Gehäuse 6.20 eingebaut, das im vorderen Bereich als Absaugkäfig 3.12 wirkt und mit einem ergonomisch geformten Handgriff 6.21 versehen ist. Bedienelemente 6.23 sind am Gehäuse und am Handgriff 6.21 so angeordnet, daß sie mit einer Hand sicher zu bedienen sind.

Zusätzlich zu den bereits in Fig. 4 gezeigten und weiter oben erläuterten Teilen umfaßt die Vorrichtung eine Abstandhalte- und Vorschubeinrichtung 6.22, die im einfachsten Fall aus zwei oder drei unterschiedlich großen Rädern besteht. Mit dieser Abstandhalte- und Vorschubeinrichtung wird sichergestellt, daß der Abstand der Fokussiereinrichtung mit Scanner von der zu bearbeitenden Oberfläche 1.6 konstant bleibt. Durch den kleinen und konstanten Luftspalt zwischen Oberfläche 1.6 und Absaugkäfig 3.12 wird eine hohe Strömungsgeschwindigkeit der angesaugten Umgebungsluft erreicht, was zu einer Minimierung der Wahrscheinlichkeit des Austrittes umweltbelastender Substanzen aus dem Absaugkäfig führt. Zusätzlich wird das Austreten von gestreuter unsichtbarer Laserstrahlung verhindert, da der Absaugkäfig aus einem Material besteht, das für unsichtbare Laserstrahlung undurchlässig, aber für sichtbares Licht durchlässig ist.

In Weiterführung des Erfindungsgedankens kann zum einen auch jede andere Laserwellenlänge eines kontinuierlich oder quasi-kontinuierlich abstrahlenden Lasers eingesetzt werden, soweit der damit eingangs beschriebene Prozeßablauf erreicht werden kann. Beispielsweise können auch Wellenlängen des CO₂-Lasers im Bereich zwischen 9,2 und 9,8 µm zum Einsatz gelangen, für bestimmte Substrate bzw. Oberflächenschichten sind auch im Bereich zwischen 1,5 und 3 µm sowie bei Wellenlängen im UV-Bereich bei unter 380 nm arbeitende, als solche bekannte cw-Laser einsetzbar. Zweckmäßigerweise ist dann ein Benetzungsfluid einzusetzen, das in seinen Absorptionseigenschaften auf die Laserwellenlänge abgestimmt ist. Wellenlängen im sichtbaren Bereich sind aufgrund der dann einzusetzenden Fluide, die zur Erreichung des Prozesses die Laserstrahlung ja absorbieren müssen und damit selber Chromophore sind, nur für Spezialfälle empfehlenswert, da diese Fluide auch dann, wenn sie nur in geringen Mengen zum Einsatz kommen, die Oberfläche anfärben und damit wiederum verunreinigen können.

In Weiterführung des Erfindungsgedankens können zudem auch gepulste oder getaktete Laser zum Einsatz kommen, was bei hinreichender Einzelpulsenergie die zusätzliche Implementierung einer Fokussierungs- bzw. aufwendigen Abtastvorrichtung überflüssig macht und damit zu einer weiteren konstruktionstechnischen Vereinfachung von Verfahren und Vorrichtung führt. Insbesondere sind sogenannte TE- bzw. TEA-CO₂-Laser einsetzbar sowie auch gepulste Festkörperlasersysteme auf der Basis Nd:YAG, Ho:YAG, Er:YAG bzw. unter Verwendung der gleichen Seltenerd-Dotierung, aber anderer Wirtsgitter, wie YSSG, YLF o.ä. oder auch Nd:Glas-Laser und ähnliche Laserquellen nach dem Stand der Technik - jeweils zusammen mit geeignetem Benetzungs-Fluid.

Das Fluid kann in Abhängigkeit von der Viskosität, gewünschten Schichtdicke, Vorschubgeschwindigkeit des Laserfokus etc. alternativ zum Aufsprühen eines Aerosols auch durch Walzenbeschichtung oder ein anderes bekanntes Beschichtungsverfahren aufgetragen werden.

## Patentansprüche

1. Verfahren zur Abtragung einer Kontaminationsschicht (1.7) von einem Substrat (1.6) ohne Beschädigung des Substrates unter Einstrahlung von Dauerstrich-Laserstrahlung (1.1),
wobei die Oberfläche der Kontaminationsschicht sequentiell mit der auf einen Fokus (1.5) konzentrierten Dauerstrich-Laserstrahlung abgetastet wird,
die Kontaminationsschicht vor Bestrahlung eines vorbestimmten Oberflächenelementes mit einem mindestens dieses Oberflächenelement bedeckenden dünnen Film (1.4a) bzw. Tröpfchenteppich eines Fluids (1.4') benetzt wird, so dass auf dem Oberflächenelement eine Fluidschicht mit einer mittleren Dicke im Bereich zwischen 0,05 mm und 0,5 mm entsteht und
die Abtastgeschwindigkeit größer ist als 1 mm/s, so dass das Oberflächenelement für eine entsprechend kurzes Behandlungsintervall mit der Dauerstrich-Laserstrahlung beaufschlagt wird, wobei
die Prozessparameter Leistungsdichte der Laserstrahlung, Behandlungsintervalldauer, Dicke des Fluidfilms, Adhäsion des Fluids an der Oberfläche, Absorptionsverhalten des Fluids für die Wirkwellenlänge der Laserstrahlung und Absorptionsverhalten des Fluiddampfes derart gewählt sind, dass eine lokale explosionsartige Verdampfung des Fluidfilms so bewirkt wird, dass eine Stoßwelle durch dass explosionsartige Verdampfen des Fluidfilms auf der abzutragenden Kontaminationsschicht entsteht, durch die die auf der zu reinigenden Oberfläche befindliche Kontaminationsschicht abgelöst und in dem abströmenden Dampf mit weggerissen wird.

2. Verfahren nach Anspruch 1, **dadurch gekennzeichnet, daß** als Laserstrahlung (1.1) die Strahlung eines Dauerstrich-CO₂-Lasers und als Fluid (1.4') Wasser oder eine eine wäßrige Flüssigkeit eingesetzt wird.

3. Verfahren nach Anspruch 1 oder 2, **dadurch gekennzeichnet, daß** das Fluid (1.4') gemischt mit einem Gas (3.11) aufgebracht, insbesondere als Aerosol (1.4) aufgesprüht, wird.

4. Verfahren nach einem der vorhergehenden Ansprüche, **dadurch gekennzeichnet, daß** der Fluidfilm (1.4a) sequentiell jeweils unmittelbar vor Einstrahlung der Laserstrahlung auf ein Oberflächenelement aufgebracht wird.

5. Verfahren nach einem der vorhergehenden Ansprüche, **dadurch gekennzeichnet, daß** die Leistungsdichte der fokussierten Laserstrahlung bei 50 kW/cm² oder darüber, bevorzugt über 250 kW/cm², liegt.

6. Verfahren nach einem der vorhergehenden Ansprüche, **dadurch gekennzeichnet, daß** das Substrat (1.6) aus einem anorganischen, insbesondere keramischen, Material besteht.

7. Nichttherapeutisches und nichtchirurgisches Verfahren nach einem der Ansprüche 1 bis 4, **dadurch gekennzeichnet, daß** das Substrat (1.6) aus einem organischen, insbesondere polymeren oder biologischen, Material besteht.

8. Vorrichtung zur Durchführung des Verfahrens nach einem der vorhergehenden Ansprüche, in der eine Fokussierund Abtastoptik (1.2, 2.8) für eine Dauerstrich-Laserstrahlung (1.1), ein Scanner (2.8) zum Ablenken des Fokusses des Laserstrahls mit einer Abtastgeschwindigkeit größer als 1 mm/s, einer Einrichtung (2.9) zur Zuführung des Fluids (1.4') und eine Absaugeinrichtung (1.3) zum Absaugen des abgedampften Fluid- und Oberflächenschichtmaterials in einem, insbesondere von Hand, auf der Oberfläche (1.6) verfahrbaren Applikator (6.20) angeordnet sind.

9. Vorrichtung nach Anspruch 9, **dadurch gekennzeichnet, daß** der Applikator (6.20) einen auf einem Handgriff (6.21) montierten Absaugkäfig (3.12) umfaßt, der insbesondere im sichtbaren Bereich transparent, aber bei der Wellenlänge der Laserstrahlung absorbierend ausgebildet ist.

## Claims

1. Method for removing a contamination layer (1.7) from a substrate (1.6) without damage to the substrate with irradiation of continuous-wave laser radiation (1.1), wherein the surface of the contamination layer is scanned sequentially with the continuous-wave laser radiation being concentrated to a focus (1.5), the contamination layer, prior to irradiation of a predetermined surface element, is wetted with a thin film (1.4a) or droplet cover of a fluid (1.4') covering at least this surface element, so a fluid layer with an average thickness in the range between 0.05 mm and 0.5 mm is produced on the surface element and the scanning speed is greater than 1 mm/s so the continuous-wave laser radiation only influences the surface element for a correspondingly short treatment interval, wherein the process parameters power density of the laser radiation, treatment interval length, thickness of the fluid film, adhesion of the fluid to the surface, absorption behaviour of the fluid for the effective laser radiation wavelength and absorption behaviour of the fluid vapour are selected such that a local explosion-like evaporation of the fluid film is effected such that an impulse wave is produced owing to the explosion-like evaporation of the fluid film on the contamination layer to be removed, by means of which the contamination layer located on the surface to be cleaned is detached and also carried away in the discharging vapour.

2. Method according to claim 1, **characterised in that** the radiation of a continuous-wave CO₂ laser is used as the laser radiation (1.1) and water or an aqueous liquid is used as the fluid (1.4').

3. Method according to claim 1 or 2, **characterised in that** the fluid (1.4') is applied mixed with a gas (3.11), in particular is sprayed on as an aerosol (1.4).

4. Method according to any one of the preceding claims, **characterised in that** the fluid film (1.4a) is applied onto a surface element sequentially, in each case, directly prior to irradiation of the laser radiation.

5. Method according to any one of the preceding claims, **characterised in that** the power density of the focussed laser radiation is 50 kW/cm² or above, preferably above 250 kW/cm².

6. Method according to any one of the preceding claims, **characterised in that** the substrate (1.6) consists of an inorganic, in particular ceramic, material.

7. Non-therapeutic and non-surgical method according to any one of claims 1 to 4, **characterised in that** the substrate (1.6) consists of an organic, in particular polymeric or biological, material.

8. Device for carrying out the method according to any one of the preceding claims, wherein are arranged focussing and scanning optics (1.2, 2.8) for continuous-wave laser radiation (1.1), a scanner (2.8) for deflecting the focus of the laser beam (1) at a scanning speed greater than 1 mm/s, an apparatus (2.9) for supplying the fluid (1.4') and an extraction apparatus(1.3) for extracting the evaporated fluid and surface layer material in an applicator (6.20) which can be moved, in particular manually, on the surface (1.6).

9. Device according to claim 9, **characterised in that** the applicator (6.20) comprises an extraction cage (3.12) mounted on a handle (6.21), which cage is transparent, in particular in the visible range, but is designed to be absorbent at the wavelength of the laser radiation.

## Revendications

1. Procédé pour enlever d'un substrat (1.6) une couche de contamination (1.7), sans endommagement du substrat, par irradiation au moyen d'un rayonnement laser (1.1) en régime continu, de la manière suivante :
on balaye de manière séquentielle la surface de la couche de contamination avec le rayonnement laser en régime continu, concentré en un point focal (1.5),
on mouille la couche de contamination avant irradiation d'un élément de surface prédéterminé, à l'aide d'un film (1.4a) ou d'un tapis de gouttelettes mince d'un fluide (1.4') recouvrant au moins ledit élément de surface, de sorte que sur l'élément de surface s'établit une couche de fluide d'une épaisseur moyenne se situant dans une plage entre 0,05 mm et 0,5 mm, et
la vitesse de balayage est supérieure à 1 mm/s, de sorte que l'élément de surface est soumis au rayonnement laser en régime continu pour un intervalle de traitement de courte durée correspondante,
les paramètres de processus suivants, à savoir la densité de puissance du rayonnement laser, la durée de l'intervalle de traitement, l'épaisseur du film de fluide, l'adhésion du fluide sur la surface, la capacité d'absorption du fluide pour la longueur d'onde active du rayonnement laser et la capacité d'absorption de la vapeur de fluide, étant choisis de manière à produire une vaporisation locale, à caractère explosif, du film de fluide de façon à ce que suite à l'évaporation à caractère explosif du film de fluide, il se produise sur la couche de contamination à enlever, une onde de choc, par laquelle la couche de contamination se trouvant sur la surface à nettoyer, est détachée et entraînée dans l'écoulement de vapeur qui s'évacue.

2. Procédé selon la revendication 1, **caractérisé en ce qu'**on met en oeuvre en guise de rayonnement laser (1.1), le rayonnement d'un laser à CO₂ en régime continu, et en guise de fluide (1,4'), de l'eau ou un liquide aqueux.

3. Procédé selon la revendication 1 ou 2, **caractérisé en ce que** l'on applique le fluide (1.4') en le mélangeant avec un gaz (3.11), notamment par pulvérisation en tant qu'aérosol.

4. Procédé selon l'une des revendications précédentes, **caractérisé en ce que** l'on applique le film de fluide (1.4a) de manière séquentielle sur un élément de surface, à chaque fois directement avant l'irradiation par le rayonnement laser.

5. Procédé selon l'une des revendications précédentes, **caractérisé en ce que** la densité de puissance du rayonnement laser focalisé se situe à une valeur de 50 kW/cm² ou davantage, de préférence à une valeur au-dessus de 250 kW/cm².

6. Procédé selon l'une des revendications précédentes, **caractérisé en ce que** le substrat (1.6) est constitué d'un matériau non organique, notamment céramique.

7. Procédé non thérapeutique et non chirurgical selon l'une des revendications 1 à 4, **caractérisé en ce que** le substrat (1.6) est constitué d'un matériau organique, notamment polymérique ou biologique.

8. Dispositif pour la mise en oeuvre du procédé selon l'une des revendications précédentes, dans lequel une optique de focalisation et de balayage (1.2, 2.8) pour un rayonnement laser (1.1) en régime continu, un scanner (2.8) pour dévier le point focal du rayon laser avec une vitesse de balayage supérieure à 1 mm/s, un dispositif (2.9) pour amener le fluide (1.4'), et un dispositif d'aspiration (1.3) pour aspirer le matériau de fluide vaporisé et de couche superficielle, sont agencés dans un applicateur (6.20) pouvant être déplacé, notamment à la main, sur la surface (1.6).

9. Dispositif selon la revendication 8, **caractérisé en ce que** l'applicateur (6.20) comprend une cage d'aspiration (3.12) montée sur une poignée (6.21) et réalisée transparente notamment dans le domaine visible, mais qui est absorbante pour la longueur d'onde du rayonnement laser.
